# EUROPEAN PATENT SPECIFICATION

(11) **EP 2 868 017 B1**
(45) Date of publication and mention of the grant of the patent: **20.11.2019**
(21) Application number: 13813505.8
(22) Date of filing: 01.07.2013
(51) Int. Cl.: H04L 5/00

(54) **SIGNALING FOR AN ENHANCED PHYSICAL DOWNLINK CONTROL CHANNEL SEARCH SPACE**
SIGNALISIERUNG FÜR DEN SUCHRAUM EINES VERBESSERTEN PHYSIKALISCHEN STEUERKANALS IN DER ABWÄRTSSTRECKE
SIGNALISATION POUR L'ESPACE DE RECHERCHE D'UN CANAL PHYSIQUE DE COMMANDE DE LIAISON DESCENDANTE AMÉLIORÉ

(30) Priority: 02.07.2012 US 201261667325 P
(43) Date of publication of application: 06.05.2015
(73) Proprietor: Intel Corporation, Santa Clara, CA 95054 (US)
(72) Inventor: CHEN, Xiaogang, Beijing 100080 (CN); ZHU, Yuan, Beijing 100013 (CN); FWU, Jong-Kae, Sunnyvale, California 94087 (US); HAN, Seunghee, Cupertino, CA 95014 (US); LI, Qinghua, San Ramon, California 94582 (US)
(74) Representative: Goddar, Heinz J.
(86) International application number: PCT/US2013/048949
(87) International publication number: WO 2014/008196

(56) References cited:
- ALCATEL-LUCENT SHANGHAI BELL ET AL: "Multiplexing of Localized and Distributed ePDCCH in Same PRBs", 3GPP DRAFT; R1-122499 MULTIPLEXING OF LOCALIZED AND DISTRIBUTED EPDCCH IN SAME PRBS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050601071, [retrieved on 2012-05-12]
- CHINA UNICOM: "Consideration on Multiplexing of Localized and Distributed ePDCCH", 3GPP DRAFT; R1-122380 CONSIDERATION ON MULTIPLEXING OF LOCALISED AND DISTRIBUTED EPDCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050600637, [retrieved on 2012-05-12]
- INTERDIGITAL COMMUNICATIONS ET AL: "On ePDCCH Multiplexing", 3GPP DRAFT; R1-121319_EPDCCH_MULTIPLEXING_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599609, [retrieved on 2012-03-20]
- INTEL CORPORATION: "Analysis of ePDCCH ICIC", 3GPP DRAFT; R1-121535_EPDCCH_ICIC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599808, [retrieved on 2012-03-20]
- LG ELECTRONICS: 'Multiplexing of Localised and Distributed ePDCCH parts in same PRBs' RL-122310, 3GPP TSG RAN WG1 MEETING #69 21 May 2012, PRAGUE, CZECH REPUBLIC, XP050600573
- CATT: 'Design of E-PDCCH search space' R1-113743, 3GPP TSG RAN WG1 MEETING #67 14 November 2011, SAN FRANCISCO, USA, XP050562240
- INTEL CORPORATION: 'On the definition of distributed ePDCCH' RL-121537, 3GPP TSG RAN WG1 MEETING #68BIS 26 March 2012, JEJU, KOREA, XP050599810
- LG ELECTRONICS: 'On ePDCCH Search Space Design Supporting Localized and Distributed Transmission' RL-122309, 3GPP TSG RAN WG1 MEETING #69 25 May 2012, PRAGUE, CZECH REPUBLIC, XP050600572
- NTT DOCOMO: 'Mapping Design for E-PDCCH in Rel-11' R1-114081, 3GPP TSG RAN WG1 MEETING #67 14 November 2011, SAN FRANCISCO, USA, XP050562297

## Description

### CLAIM OF PRIORITY

Priority of United States Provisional patent application Serial No. 61/667,325, attorney docket No. P45842Z, entitled "ECCE INDEXING FOR EPDCCH SEARCH SPACE DESIGN" filed on July 2, 2012.

### BACKGROUND

Wireless mobile communication technology uses various standards and protocols to transmit data between a base transceiver station (BTS) and a wireless mobile device. In the third generation partnership project (3GPP) long term evolution (LTE) systems, the BTS is a combination of an evolved Node Bs (eNode Bs or eNBs) and Radio Network Controllers (RNCs) in a Universal Terrestrial Radio Access Network (UTRAN), which communicates with the wireless mobile device, known as a user equipment (UE). Data is transmitted from the eNode B to the UE via a physical downlink shared channel (PDSCH). A physical downlink control channel (PDCCH) is used to transfer downlink control information (DCI) that informs the UE about resource allocations or scheduling related to downlink resource assignments on the PDSCH, uplink resource grants, and uplink power control commands. The PDCCH signal may be transmitted prior the PDSCH in each subframe transmitted from the eNode B to the UE.

The PDCCH signal is designed to be demodulated at the UE based on a cell specific reference signal (CRS). However, the use of a CRS does not take into account the increased complexities of advanced LTE systems. For instance, in heterogeneous networks, multiple nodes may simultaneously transmit within a single cell. The use of the cell specific reference signal may limit advanced techniques to increase cell capacity.

ALCATEL-LUCENT SHANGHAI BELL ET AL: "Multiplexing of Localized and Distributed ePDCCH in Same PRBs",3GPP DRAFT; R1-122499 MULTIPLEXING OF LOCALIZED AND DISTRIBUTED EPDCCH IN SAME PRBS, 3RD GENERATION PARTNERSHIP PROJECT (3GPP), vol. RAN WG1, no. Prague, Czech Republic; 20120521 - 20120525, 12 May 2012 (2012-05-12), XP050601071, presents an enhanced PDCCH where control information can be transmitted in a localized and a distributed manner and where control elements for both transmission modes can be multiplexed in a resource block pair.

### BRIEF DESCRIPTION OF THE DRAWINGS

The invention described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
FIG. 1 illustrates a block diagram showing processes performed on downlink control information (DCI) in accordance with an example;
FIG. 2 illustrates a block diagram showing additional processes performed on downlink control information (DCI) in accordance with an example;
FIG. 3 illustrates a block diagram of a resource grid in accordance with an example;
FIG. 4A and 4B each illustrate a block diagram of an enhanced physical downlink control channel (ePDCCH) mapped to a subframe in accordance with an example;
FIG. 5A and 5B each illustrates a block diagram of an enhanced physical downlink control channel (ePDCCH) mapped to a subframe in accordance with an additional example;
FIG. 6A and 6B illustrates a block diagram of an enhanced physical downlink control channel (ePDCCH) mapped to a subframe in accordance with an additional example;
FIG. 7 illustrates a flow chart of localized and distributed independent eCCE indexing in accordance with an example;
FIG. 8 illustrates a flow chart depicting global localized and distributed eCCE indexing in accordance with an example;
FIG. 9 illustrates an example of a block diagram of a mobile communication device in accordance with an example; and
FIG. 10 illustrates an example of a block diagram of an eNB and a UE.
FIG. 11 illustrates an example of a system.

Reference will now be made to the exemplary embodiments illustrated, and specific language will be used herein to describe the same. It will nevertheless be understood that no limitation of the scope of the invention is thereby intended.

### DETAILED DESCRIPTION

The invention is defined and limited only by the scope of appended claims 1-15. In what follows, all references to embodiments not falling within the scope of the appended claims are to be interpreted as examples useful for understanding the invention.

References in the specification to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

Embodiments of the invention may be implemented in hardware, firmware, software, or any combination thereof. Embodiments of the invention may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others.

The following description may include terms, such as first, second, etc. that are used for descriptive purposes only and are not to be construed as limiting.

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter. The following definitions are provided for clarity of the overview and embodiments described below.

In 3GPP radio access network (RAN) LTE systems, the transmission station may be a combination of Evolved Universal Terrestrial Radio Access Network (E-UTRAN) Node Bs (also commonly denoted as evolved Node Bs, enhanced Node Bs, eNodeBs, or eNBs) and Radio Network Controllers (RNCs), which communicates with the wireless mobile device, known as a user equipment (UE). A downlink (DL) transmission may be a communication from the transmission station (or eNodeB) to the wireless mobile device (or UE), and an uplink (UL) transmission may be a communication from the wireless mobile device to the transmission station.

In homogeneous networks, the transmission station, also called macro nodes, may provide basic wireless coverage to mobile devices in a cell. Heterogeneous networks (HetNets) were introduced to handle the increased traffic loads on the macro nodes due to increased usage and functionality of mobile devices. HetNets may include a layer of planned high power macro nodes (or macro-eNBs) overlaid with layers of lower power nodes (micro-eNBs, pico-eNBs, femto-eNBs, or home eNBs [HeNBs]) that may be deployed in a less well planned or even entirely uncoordinated manner within the coverage area of the macro nodes. The macro nodes may be used for basic coverage, and the low power nodes may be used to fill coverage holes, to improve capacity in high usage locations or at the boundaries between the macro nodes' coverage areas, and improve indoor coverage where building structures impede signal transmission.

The deployment of a HetNet may improve the efficiency of the transmission of data to a UE in a cell, such as data communicated on a physical downlink shared channel (PDSCH). The efficiency is increased by splitting the cell into smaller areas with the additional use of low power nodes.

The communication of data on the PDSCH is controlled via a control channel, referred to as a physical downlink control channel (PDCCH). The PDCCH may be used for downlink (DL) and uplink (UL) resource assignments, transmit power commands, and paging indicators. The downlink PDSCH scheduling grant may be designated to a particular UE for dedicated PDSCH resource allocation to carry UE-specific traffic, or it may be designated to all UEs in the cell for common PDSCH resource allocation to carry broadcast control information such as system information or paging.

The data carried on the PDCCH is referred to as downlink control information (DCI). There are several traditional formats that are defined for a DCI message. For example, defined formats include:
Format 0 for transmission of uplink shared channel (UL-SCH) allocation;
Format 1 for transmission of downlink shared channel (DL-SCH) allocation for Single Input Multiple Output (SIMO) operation;
Format 1A for compact transmission of DL-SCH allocation for SIMO operation or allocating a dedicated preamble signature to a UE for random access;
Format 1B for transmission control information of Multiple Input Multiple Output (MIMO) rank 1 based compact resource assignment;
Format 1C for very compact transmission of PDSCH assignment;
Format 1D, the same as format 1B with additional information of power offset;
Format 2 and Format 2A for transmission of DL-SCH allocation for closed and open loop MIMO operation, respectively; and
Format 3 and format 3A for transmission of transmission power control (TPC) command for an uplink channel.

This list is not intended to be complete. Additional formats may also be used. As the complexity of wireless networks increases, such as the use of HetNets having multiple different types of nodes, other formats may be created to carry the desired downlink control information.

Multiple UEs may be scheduled in one subframe of a radio frame. Therefore, multiple DCI messages may be sent using multiple PDCCHs. The DCI information in a PDCCH may be transmitted, by an eNB, using one or more control channel elements (CCE). A CCE is comprised of a group of resource element groups (REGs). A legacy CCE may include, e.g., up to nine REGs. Each REG is comprised of four resource elements. Each resource element may include two bits of information when quadrature modulation is used. Therefore, a legacy CCE may include up to 72 bits of information. When more than 72 bits of information are needed to convey the DCI message, multiple CCEs may be employed. The use of multiple CCEs is referred to as aggregation level. 3GPP LTE Releases 8, 9 and 10 define aggregation levels as 1, 2, 4 or 8 consecutive CCEs allocated to one PDCCH.

In various embodiments, a method may comprise mapping, by a base station of an Internet Protocol (IP) based wireless communication network, modulated symbols in an enhanced physical downlink control channel (ePDCCH) of a user equipment (UE) to a plurality of enhanced control channel elements (eCCEs), wherein the plurality of eCCEs comprises at least one of localized eCCEs and distributed eCCEs; performing, by the base station, logical indexing to the localized eCCEs based on an aggregation level of the ePDCCH; performing, by the base station, logical indexing to the distributed eCCEs based on an aggregation level of the ePDCCH.

In various embodiments, the method may further comprise determining, by the base station, a ratio of localized eCCEs to distributed eCCEs in a resource block pair of the search space of the ePDCCH based on a quality of the ePDCCH.

In various embodiments, the method may further comprise indicating, by the base station, a ratio of localized and distributed ePDCCH candidates that the UE should search based on the ratio of localized eCCEs to distributed eCCEs.

In various embodiments, the method may further comprise distributing, by the base station, the logical indexes of the localized eCCEs in the search space based on the aggregation level of the ePDCCH.

In various embodiments, the method may further comprise in response to determining that a first distributed eCCE is using a first ICIC coordinate region for the ePDCCH transmission, blanking, by the base station, the first ICIC coordinate region and distributing the logical eCCEs for a second distributed eCCE that is neighboring to the first distributed eCCE in a second ICIC coordinate region based on the aggregation level of the ePDCCH.

In various embodiments, the method may further comprise deriving, by the base station, indexes for a physical uplink control channel (PUCCH) of the UE by physical eCCE indexes that map to the plurality of logical indexes.

In various embodiments, the method may further comprise interleaving, by the base station, the logical localized indexes and the logical distributed indexes with each other to provide a global logical indexing, based on the aggregation level of the ePDCCH.

In various embodiments, the method may further comprise distributing, by the base station, the logical distributed eCCEs in different ICIC coordinate regions for the ePDCCH transmission in the global logical indexing, based on the aggregation level of the ePDCCH.

In various embodiments, the method may further comprise performing, by the base station, ePDCCH resource allocation based on the logical indexes of the ePDCCH.

In various embodiments, the method may further comprise performing, by the base station, ePDCCH blind decoding based on the logical indexes of the ePDCCH.

In various embodiments, each ICIC coordinate region equals to one equivalent localized eCCE in each resource block pair.

In various embodiments, a system may comprise a processor configured to communicate with user equipment (UE) via an enhanced node B (eNB) station of an Internet Protocol (IP) based wireless communication network; and a storage medium coupled to the processor, the storage medium having instructions stored thereon, that if executed by the processor, result in mapping, by the eNB station, modulated symbols in an enhanced physical downlink control channel (ePDCCH) of a user equipment (UE) to a plurality of enhanced control channel elements (eCCEs), wherein the plurality of eCCEs comprises localized eCCEs and distributed eCCEs; performing, by the eNB station, logical indexing to the localized eCCEs and the distributed eCCEs based on an aggregation level of the ePDCCH.

In various embodiments, the instructions, if executed, may further result in determining, by the eNB station, a ratio of localized eCCEs to distributed eCCEs in a resource block pair of the search space of the ePDCCH based on a quality of the ePDCCH.

In various embodiments, the instructions, if executed, may further result in: indicating, by the eNB station, a ratio of localized and distributed ePDCCH candidates that the UE should search based on the ratio of localized eCCEs to distributed eCCEs.

In various embodiments, the instructions, if executed, may further result in: distributing, by the eNB station, the logical indexes of the localized eCCEs in different resource block pairs in the search space based on the aggregation level of the ePDCCH.

In various embodiments, the instructions, if executed, may further result in: distributing, by the eNB station, the logical indexes for distributed eCCEs in different ICIC coordinate regions for the ePDCCH transmission based on the aggregation level of the ePDCCH, wherein each ICIC coordinate region equals to one equivalent localized eCCE in each resource block pair.

In various embodiments, the instructions, if executed, may further result in: deriving, by the base station, indexes for a physical uplink control channel (PUCCH) of the UE by physical eCCE indexes that map to the plurality of logical indexes.

In various embodiments, the instructions, if executed, may further result in: interleaving, by the eNB station, the logical localized indexes and the logical distributed indexes with each other to provide a global logical indexing, based on the aggregation level of the ePDCCH.

In various embodiments, the instructions, if executed, may further result in: distributing, by the eNB station, the logical distributed indexes in different ICIC coordinate regions for the ePDCCH transmission in the global logical indexing, based on the aggregation level of the ePDCCH.

In various embodiments, the instructions, if executed, may further result in: performing, by the eNB station, ePDCCH resource allocation based on the logical indexes of the ePDCCH.

In various embodiments,, the instructions, if executed, may further result in: performing, by the eNB station, ePDCCH blind decoding based on the logical indexes of the ePDCCH.

In various embodiments, an apparatus to be employed by an evolved Node B (eNB) of a wireless communication network may comprise: a resource mapping module to mapping modulated symbols in an extended physical downlink control channel (ePDCCH) to a plurality of enhanced control channel elements (eCCEs), wherein the plurality of eCCE comprise at least one of localized eCCEs and eCCEs, wherein the ePDCCH is configured to be communicated to a user equipment (UE) in a radio frame, an eCCE indexing module to perform logical indexing to at least one of the localized eCCEs and the distributed eCCEs based on an aggregation level of the ePDCCH.

In various embodiments, the eCCE indexing module may be further to determine a ratio of localized eCCEs to distributed eCCEs in a resource block pair of the search space of the ePDCCH based on a quality of the ePDCCH.

In various embodiments, the eCCE indexing module may be further to indicate a ratio of localized and distributed ePDCCH candidates that the UE should search based on the ratio of localized eCCEs to distributed eCCEs.

In various embodiments, the eCCE indexing module may be further to distribute the logical indexes of the localized eCCEs in different resource block pairs in the search space based on the aggregation level of the ePDCCH.

In various embodiments, the eCCE indexing module may be further to distribute the logical eCCEs for distributed eCCEs in different ICIC coordinate regions for the ePDCCH transmission based on the aggregation level of the ePDCCH, wherein each ICIC coordinate region equals to one equivalent localized eCCE in each resource block pair.

In various embodiments, the eCCE indexing module may be further to derive indexes for a physical uplink control channel (PUCCH) of the UE by physical eCCE indexes that map to the plurality of logical indexes.

In various embodiments, the eCCE indexing module may be further to interleave the logical localized indexes and the logical distributed indexes with each other to provide a global logical indexing, based on the aggregation level of the ePDCCH.

In various embodiments, the eCCE indexing module may be further to distribute the logical distributed indexes in different ICIC coordinate regions for the ePDCCH transmission in the global logical indexing, based on the aggregation level of the ePDCCH.

In various embodiments, an apparatus to be employed by a user equipment (UE) of a wireless communication network may comprise circuitry to receive radio resource control (RRC) signaling from an evolved Node B (eNB) that is configured to communicate with the user equipment, the RRC signal comprises a ratio of localized eCCEs to distributed eCCEs in a resource block pair of the search space of an ePDCCH, wherein the ePDCCH is configured to be communicated to the user equipment (UE) in a radio frame, de-index logical indexes of the at least one of the localized eCCEs and the distributed eCCEs based on an aggregation level of the ePDCCH.

In various embodiments, the RRC signaling may further comprise information on a ratio of localized and distributed ePDCCH candidates that the UE should search that is based on the ratio of localized eCCEs to distributed eCCEs.

In various embodiments, the logical indexes of the localized eCCEs may be configured to distribute in different or the same resource block pairs in the search space based on the aggregation level of the ePDCCH.

In various embodiments, the logical indexes for distributed eCCEs may be configured to distribute in different ICIC coordinate regions for the ePDCCH transmission based on the aggregation level of the ePDCCH, wherein each ICIC coordinate region equals to one equivalent localized eCCE in each resource block pair.

In various embodiments, the logical indexes may be mapped to physical eCCE indexes of the ePDCCH, and wherein the physical eCCE indexes are used in implicit physical uplink control channel (PUCCH) index derivation.

In various embodiments, the logical localized indexes and the logical distributed indexes may be interleaved with each other to provide a global logical indexing, based on the aggregation level of the ePDCCH.

In various embodiments, the logical distributed indexes may be distributed in different ICIC coordinate regions for the ePDCCH transmission in the global logical indexing, based on the aggregation level of the ePDCCH.

In various embodiments, the apparatus may further comprise circuitry to perform ePDCCH resource allocation based on the logical indexes of the eCCEs.

In various embodiments, the apparatus may further comprise circuitry to perform ePDCCH blind decoding based on the logical indexes of the eCCEs.

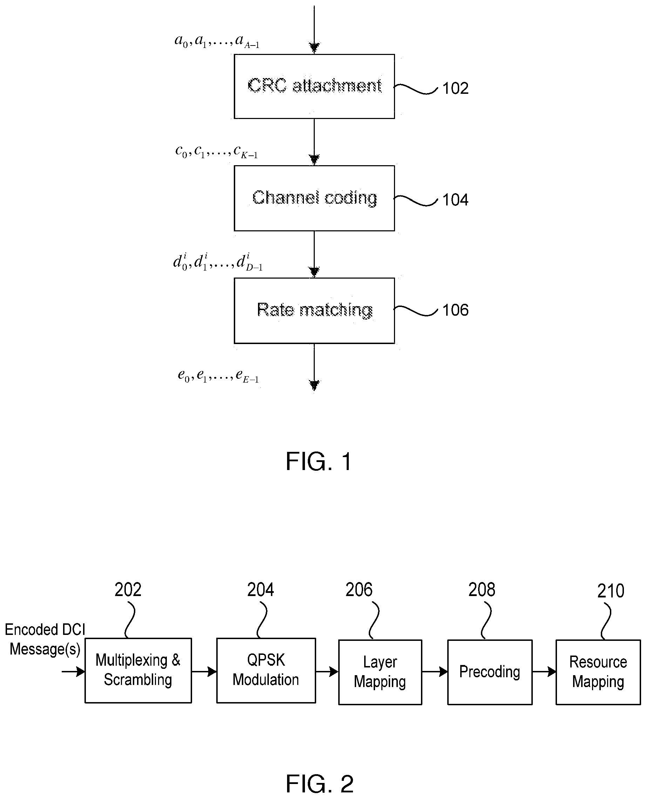

To create the PDCCH payload, the DCI may undergo a number of processes, as illustrated in FIG. 1. The processes may include the attachment of a cyclic redundancy check 102 used for error detection in the DCI message; channel coding 104 for use in forward error correction, and rate matching 106 that is used to output a bit stream with a desired code rate. Detailed instructions for performing the cyclic redundancy check, channel coding, and rate matching are provided in the 3GPP LTE specifications, such as Release 8, 9 and 10.

The encoded DCI message(s) for each control channel may then be multiplexed and scrambled before undergoing modulation, layer mapping, precoding and resource mapping, as illustrated in the block diagram of FIG. 2.

Blocks of encoded bits for each control channel may be multiplexed 202, e.g., by a multiplexer, to create a block of data. The size of the blocks of data may be altered to ensure that PDCCHs start at a desired CCE position. The size of the blocks of data may also be altered to ensure that the blocks of bits match the amount of REGs that can be used by the PDCCH. The multiplexed block of bits may then be scrambled. One scrambling process that is currently used is the use of a bit-wise XOR operation with a cell specific scrambling sequence. Other types of scrambling may be used as well. The encoding process is outlined in the 3GPP LTE specification.

The scrambled bits may then undergo modulation 204, e.g., by a modulating module. Quadrature Phase Shift Keying (QPSK) is often used to create a block of complex-valued modulation symbols. In other embodiments, other types of modulation, such as Bi-Phase Shift Keying (BPSK), 16 Quadrature Amplitude Modulation (16-QAM), 32-QAM, 64-QAM, and so forth may also be used.

The complex symbols may be mapped 206, e.g., by a layer mapping module, to multiple layers, depending on a number of transmit antennas used at the eNode B. One, two or four layer mapping has been used in legacy systems. Additional layers, such as eight layer mapping may also be used. The mapping process is outlined in the 3GPP LTE specification.

A precoder 208 may take a block from the layer mapper 206 to generate an output for each antenna port. Precoding for transmission diversity may be performed for two or four antennas in legacy systems based on the 3GPP LTE Rel. 8 specification. Transmission diversity for more complex systems, such as an eNode B with eight antennas, may also be applied using precoding. One scheme used for precoding includes the Alamouti scheme for two antennas.

The complex valued symbols for each antenna may then be divided into groups for mapping 210, e.g., by a resource mapping module, to resource elements. In legacy systems, the complex valued symbols for each antenna may be divided into quadruplets. The sets of quadruplets may then undergo a permutation such as interleaving and cyclic shifting before being mapped to resource elements within resource element groups.

The PDCCH may be transmitted prior to the PDSCH in each subframe transmitted from the eNode B to the UE. The demodulation of the PDCCH at the UE may be based on a cell-specific reference signal (CRS). Each cell is only assigned a single reference signal. However, the use of the single CRS may limit the number of nodes that can be deployed in a cell.

A UE may receive a PDCCH using blind decoding. The resources used by the UE for PDCCH blind decoding may be referred to as the search space. A different search space may be used to detect and demodulate an ePDCCH for a UE specific reference signal (UE-RS) relative to the use of a CRS.

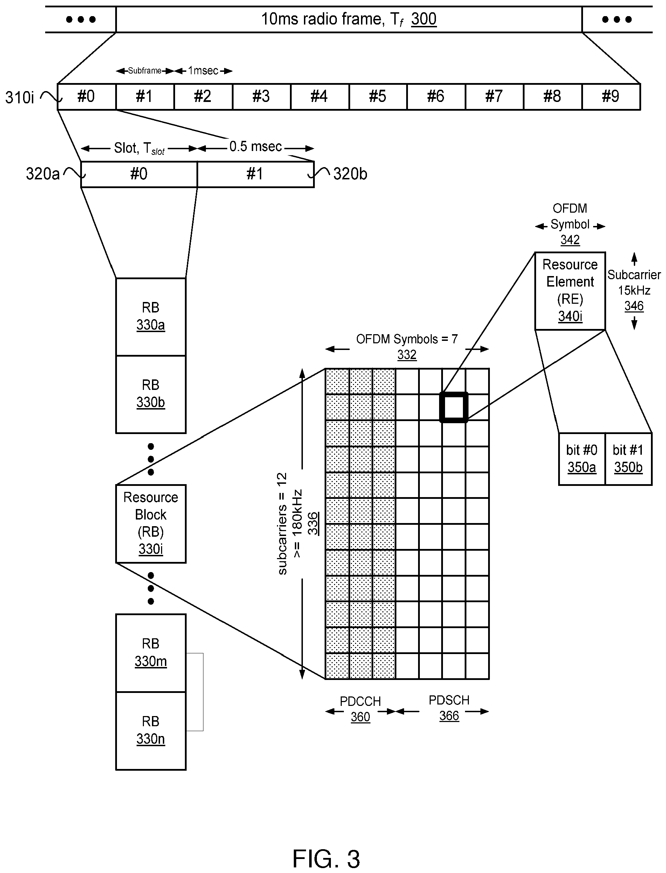

The signal on the physical (PHY) layer used to convey the PDCCH may be transmitted by the eNode B (enhanced Node B or evolved Node B or eNB) to the user equipment (UE) using a generic long term evolution (LTE) frame structure, as illustrated in FIG. 3. In the illustration of FIG. 3, a legacy PDCCH is illustrated.

A radio frame 300 may have a duration, T*_{f}*, of 10 milliseconds (ms). Each radio frame may be segmented or divided into ten subframes 310i that are each 1 ms long. Each subframe may be further subdivided into two slots 320a and 320b, each with a duration, T*ₛₗₒₜ*, of 0.5 ms. In a legacy system, the first slot (#0) 320a may include a physical downlink control channel (PDCCH) 360 and a physical downlink shared channel (PDSCH) 366, and the second slot (#2) 320b may include data using the PDSCH. Each slot for a component carrier (CC) used by the eNode B and the UE may include multiple resource blocks (RBs) 330a, 330b, 330i, 330m, and 330n based on the CC frequency bandwidth.

Each RB 330i may include 12 - 15kHz subcarriers 336 (on the frequency axis) and 6 or 7 orthogonal frequency-division multiplexing (OFDM) symbols 332 (on the time axis) per subcarrier. In one embodiment, the RB may use seven OFDM symbols if short or normal cyclic prefix is employed. In another embodiment, the RB may use six OFDM symbols if an extended cyclic prefix is used. The resource block may be mapped to 84 resource elements (REs) 340i using short or normal cyclic prefixing, or the resource block may be mapped to 72 REs (not shown) using extended cyclic prefixing. The RE may be a unit of one OFDM symbol 342 by one subcarrier (e.g., 15kHz) 346. Each RE may transmit two bits 350a and 350b of information using QPSK. The actual number of bits communicated per RE is dependent on the level of modulation used.

The control region of each legacy serving cell in carrier aggregation consists of a set of (CCEs). In one embodiment, the CCEs may be numbered from 0 to *N_{CCE,k}* -1, where *N_{CCE,k}* is the total number of CCEs in the control region of subframe *k.* The UE may monitor a set of PDCCH candidates on one or more activated serving cells as configured by higher layer signaling for control information. The term monitoring, as used herein, may imply attempting, at the UE, to decode each of the PDCCH candidates in the set according to all of the monitored DCI formats. For example, the UE may utilize one or more CCEs to monitor a PDCCH in the set.

A physical control channel may be transmitted on an aggregation of one or several CCEs. The CCE(s) may be transmitted consecutively. As previously discussed, one example control channel element may correspond to nine resource element groups (REGs). Each legacy REG comprises four resource elements. In one embodiment, the number of REGs that are not assigned to a physical control format indicator channel (PCFICH) or a physical hybrid automatic repeat request (ARQ) indicator channel (PHICH) is denoted N_{REG}. The CCEs available in a 3GPP LTE system may be numbered from 0 to N_{CCE} - 1, where N_{CCE} = (N_{REG}/9). The PDCCH may support multiple formats. Multiple PDCCHs may be transmitted in a subframe. One example of PDCCH formats is provided in the following table.

The currently described PDCCH transmission and mapping process, as described by the 3GPP LTE Release 8, 9 and 10 specifications, may create limitations to advances that are made in other areas of wireless communication. For example, mapping of CCEs to subframes in OFDM symbols may spread over the control region to provide spatial diversity.

For instance, future networks may be configured HetNets that can include a number of different kinds of transmission nodes in a single macro cell serving area. More UEs can be served simultaneously by macro and pico cells in the HetNet. The 3GPP LTE Rel. 8 PDCCH is designed to demodulate based on cell-specific reference signals, which makes it difficult to fully explore cell splitting gain. The PDCCH design may not be adequate to convey the information needed to allow a UE to take advantage of the multiple transmission nodes in the HetNet to increase bandwidth and decrease battery usage at the UE.

In addition, the use of multi-user multiple-input multiple-output (MU-MIMO), machine to machine communication (M2M), PDSCH transmission in a multicast\broadcast single-frequency network, and cross carrier scheduling in carrier aggregation can require increased capacity for the PDCCH. The use of UE specific reference signals in PDCCH demodulation at the UE can allow the use of multiple nodes in a HetNet. Rather than relying on a single common reference symbol for an entire cell, each reference symbol may be UE specific to provide a beam forming diversity and a cell splitting gain. In addition, interference coordination with neighboring cells may use the mapping procedures to guarantee orthogonality among neighboring cells, thereby reducing or avoiding subcarrier collisions. Moreover, the capacity of the ePDCCH design may be increased for future networks.

Accordingly, an enhanced PDCCH (ePDCCH) may be configured with increased capacity to allow advances in the design of cellular networks and to minimize currently known challenges. The examples of ePDCCH design and mapping principals are not intended to be limiting. Because of the broad design aspects of a ePDCCH, including but not limited to CRC attachment, channel coding, rate matching, multiplexing, scrambling, modulation, layer mapping, precoding, resource mapping, and search space requirements, the examples provided are not intended to limit to a certain system. However, the examples can provide improvements upon which other aspects of an ePDCCH design and implementation can be expanded on.

In one embodiment, a relay physical downlink control channel (R-PDCCH) design with non-interleaved UE-RS based mapping may be used for ePDCCH design to achieve scheduling and a beamforming gain when channel state information (CSI) feedback is available. For example, the ePDCCH design may base on a non-cross-interleaved R-PDCCH design. however, in some embodiments, the R-PDCCH design that is limited to a relay-specific restriction may not be required ePDCCH design to provide higher scheduling flexibility at eNB, e.g., in the scenario where downlink-uplink traffic has an imbalance. In one embodiment, a UE may monitor resource blocks in both slots for downlink assignment and uplink grant.

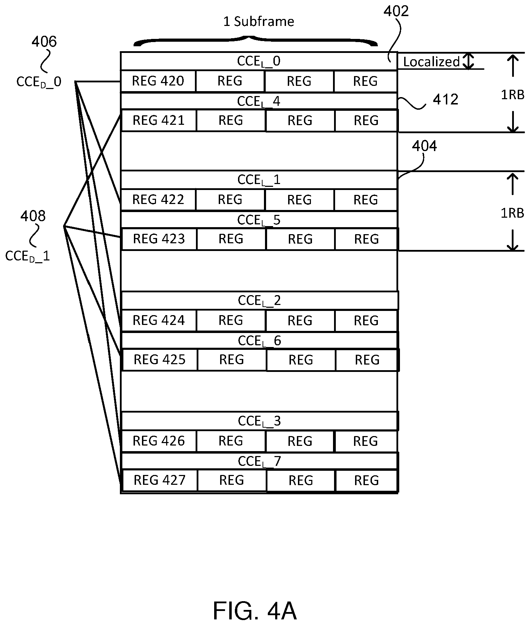

FIG. 4A provides an example of enhanced channel control elements (eCCEs) indexing for an aggregation level (AGGL) of one. The aggregation level of one may imply that the DCI information in an ePDCCH candidate is able to be mapped to a single CCE. In one embodiment, each resource block pair may comprise two resource blocks, each having the same subcarriers, located in a first and second slot in a subframe of a radio frame, as shown in FIG. 3. As shown in Fig. 4A, CCE_{L} may represent a localized eCCE and CCE_{D} may represent a distributed eCCE. As shown in Fig. 4A, there are four CCEs in one RB pair; however, in some embodiments, a different number of CCEs can be in one RB pair (e.g, 2 or any other number based system requirement).

For example, a localized ePDCCH may be mapped to a localized eCCE 402 that may further be mapped in frequency and time to a fixed number of resource element groups (REGs), e.g., 4 REGs, in a single resource block pair. Alternatively, the number of REGs in a single resource block pair may vary based on DCI data load requirements (e.g., the amount of DCI data), or other competing requirements in the resource block, such as PCFICH requirements, PHICH requirements, and resource symbol requirements for data allocated within each resource block. Each REG may include a plurality of resource elements (e.g. 9). The resource elements to which the localized eCCE 402 is mapped to in the resource block pair may be contiguous in time and/or frequency. Alternatively, the resource elements may be separated in time and/or frequency. The localized eCCE 402 may be mapped across a slot boundary in the physical resource block pair.

In one embodiment, random beam forming diversity, interference coordination with neighboring cells may be further considered for ePDCCH design. For example, a distributed ePDCCHs having the same aggregation level may be mapped to one or more distributed eCCEs that may further be mapped to a plurality of REGs distributed in different resource block pairs. In the embodiment of FIG. 4A with AGGL one, the distributed eCCEs 406 may be mapped to a plurality of REGs that are distributed in different resource block pairs. In another embodiment, the distributed eCCEs for different distributed ePDCCHs belonging to the same aggregation level may be separated as far as possible, as shown in FIG. 4A. The frequency separation of the REGs can provide frequency diversity gain. Multiple REGs in a distributed eCCE may be mapped to several separate resource block pairs, although more than one REG may be mapped to a single resource block pair. The more widely distributed REGs may lead to greater diversity gain.

In one embodiment, a R-PDCCH design with no cross-interleaving may also be utilized for distributed CCE to RE mapping. For example, the distributed ePDCCH design can use UE-RS instead of CRS to be mapped in the RBs for distributed eCCE mapping of ePDCCH decoding. The ePDCCH design may allow a great scheduling flexibility. Further, UEs may be configured to monitor the set of RBs in both slots for downlink assignment and uplink grant. In one embodiment, the ePDCCH may be decoded based on UE-RS and the REGs in different RBs may be precoded by different precoder to realize random beamforming gain and achieve spatial domain diversity. The precoder for each RB pair or RB pair bundling may be predefined or randomly selected by an eNB.

In FIG. 4A, a distributed ePDCCH having an aggregation level of one may be mapped to a distributed eCCE. The aggregation level of one may represent that the DCI information is able to be mapped to a single distributed eCCE, e.g., 406 or 408. In the example of FIG. 4A, a distributed eCCE may contain, e.g., four REGs that may be mapped to resource blocks in a subframe that are separated in frequency as much as possible, depending on the channel profile and system bandwidth to provide frequency diversity gain. For example, the distributed eCCE 406 may contain four REGs. However, a lesser or a greater number of REGs may be used in each distributed eCCE. If a different modulation scheme than QPSK is used on the DCI information, a greater number of REs and/or bits may be contained in each REG. In one embodiment, the REGs in the distributed eCCE 406 may be mapped to resource blocks in a subframe that are separated in frequency, depending on the channel profile and system bandwidth to provide frequency diversity gain. Similarly, the REGs for the distributed eCCE 408 may be distributed in frequency.

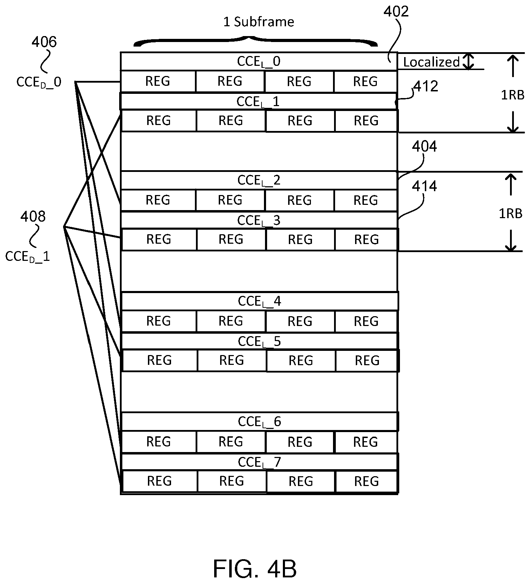

The REGs in distributed eCCE 406 and distributed eCCE 408 may have the same distribution or different distribution amongst resource blocks in a subframe. For example, the distributed eCCE 406 may be mapped to four REGs 420, 422, 424 and 426 that locate in different physical resource block (PRB) pairs and the distributed eCCE 408 may be mapped to four REGs 421, 423, 425 and 427 that locate in different PRB pairs. In the example of FIG. 4B, a distributed eCCE may be mapped to REGs in a subframe that are separated in frequency as much as possible, depending on the channel profile and system bandwidth to provide frequency diversity gain. While the REGs illustrated in the distributed eCCE 406 and 408 are each shown to be in the same time position within a resource block pair, this is not required for each respective distributed eCCE. The distributed REGs in distributed eCCE 406 and eCCE 408 may be in a different temporal location within a resource block pair. Each distributed eCCE in a subframe may have a same number of REGs or a different number of REGs. In the example of FIG. 4B, distributed eCCE 406 may have four REGs 420, 422, 424 and 426 and distributed eCCE 408 may have four REGs 421, 423, 425 and 427.

In one embodiment, the localized eCCEs and the distributed eCCEs may be indexed independently. For example, as shown in Fig.1, the localized eCCEs and the distributed eCCEs are indexed beginning from zero; however, in some embodiments, the localized eCCEs and the distributed eCCEs may be indexed differently. In one embodiment, a ratio of localized eCCEs to distributed eCCEs in one PRB pair may be configured by high layer signaling, e.g., via radio resource control (RRC) signaling from eNB. For example, in one PRB pair with four eCCEs, the ratio of localized eCCEs to distributed eCCEs may be 2:2, 3:1, 1:3, 4:0 or 0:4. In one embodiment, the ratio of common search space may be set to be fixed, e.g., 0:4 with zero localized eCCE and four distributed eCCEs. In another embodiment, the ratio of localized to distributed eCCEs may be used, by the UE, to implicitly indicate the ratio of localized and distributed ePDCCH candidates that UE should search. In some embodiments, the ratio of localized and distributed candidates that UE should search may be indicated through RRC signaling. In some embodiments, an eNB may adjust the ratio of localized and distributed candidates that UE should search based on, e.g., a control channel quality. For example, more localized eCCEs than distributed eCCEs may be configured for a better channel quality.

FIG. 4B illustrates an example of enhanced channel control elements (eCCEs) for ePDCCH with an aggregation level (AGGL) of two. Similar to Fig. 4A, CCE_{L} represents a localized eCCE and eCCE_{D} represents a distributed eCCE. As shown in Fig. 4B, there are two localized eCCEs and two distributed eCCEs in each RB pair; however, in some embodiments, a different number of CCEs and a different localized to distributed ratio may be used for the RB pair. In one embodiment, a localized ePDCCH having aggregation level of two may be mapped to two separate localized eCCEs, e.g., 402 and 412 in a resource block pair; however, in some embodiments, the two localized eCCEs 402 and 412 may be contiguous eCCEs in the resource block pair. In another embodiment, a distributed ePDCCH having aggregation level of two may be mapped to distributed eCCEs, e.g., 406 and 408.

In one embodiment, the aggregation level (AGGL) may be considered in localized eCCE indexing. An aggregation level specific localized eCCE indexing may be used to achieve scheduling gain. For example, FIGs. 4A and 4B show logical localized eCCE indexing for AGGLs of one and two, respectively. A logical index may be mapped to a physical index in the examples. For example, in a logical index to physical index mapping, physical eCCEs may be indexed in frequency increasing order while logical index for eCCEs may be AGGL specifically mapped to the physical index.

In FIG. 4A, logical indexes for localized eCCEs with AGGL one may be distributed in four PRB pairs instead of simply increased in frequency domain. The localized eCCE 402 in FIG. 4A may have an index of CCE_{L}_0. The localized eCCE 412 that is in the same PRB pair as the localized eCCE 402 may be indexed as CCE_{L}_4. More scheduling gain may be obtained based on a bigger offset in the logical indexes for localized eCCEs. For example, a different scheduling gain may be obtained with the localized eCCE 402 indexed as 0 and localized eCCE 412 indexed as 2, 3, 5, 6 or 7, etc. FIG. 4B shows an example of logical localized eCCE indexes used for AGGL two. A localized ePDCCH with an aggregation level of two may be mapped to two localized eCCEs, e.g., 402 and 412 in a resource block pair. The logical indexes for the two localized eCCEs 402 and 412 for the same localized ePDCCH may be increased in frequency domain. For example, the localized eCCE 402 may be indexed from zero and the localized eCCE 412 may have index of one. Similarly, the localized eCCE 404 and 414 that are used for the same ePDCCH transmission or ePDCCH candidates decoding may be indexed as 2 (CCE_{L}_2) and 3 (CCE_{L}_3), respectively.

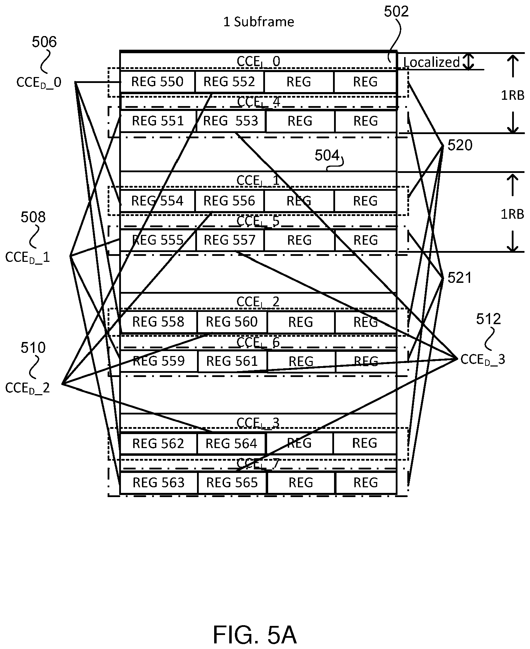

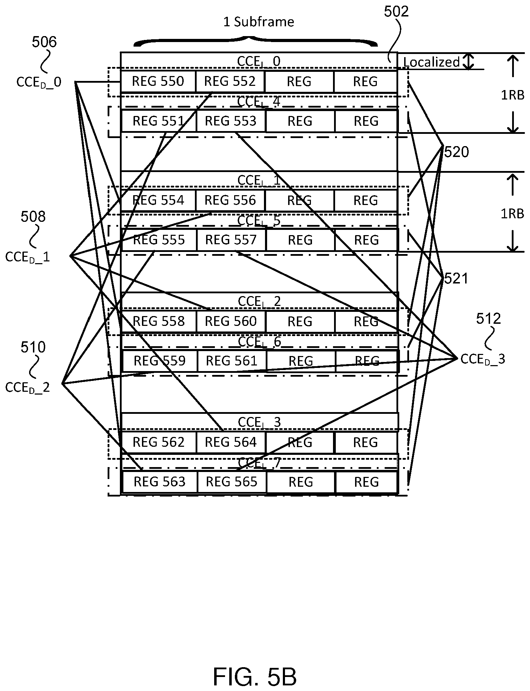

FIGs. 5A and 5B illustrates examples of logical distributed eCCE indexing for distributed eCCEs. For an ePDCCH carried by one or more distributed eCCEs, logical distributed eCCE indexing may take Inter-Cell Interference Coordination (ICIC) into consideration. The distributed eCCE indexes belonging to the search space for a given AGGL may distribute across different ICIC coordinate region to maximize the ICIC gain. In one embodiment, each REG in a distributed eCCE may be separated in frequency from other REGs in the eCCE to gain frequency diversity.

FIG.5A takes eCCEs with AGGL one as an example. In this example, an ICIC coordinate region in each PRB pair may equal to one equivalent eCCE_{L} in the PRB pair. Although FIG. 5A illustrates each PRB pair may comprise two ICIC coordinate regions, a different number of ICIC coordinate regions may be present in a PRB pair. In one embodiment, in response to determining , by a first eNB, that a neighboring cell of a second eNB uses a first coordinate region for ePDCCH transmission, the first eNB may blank the first coordinate region and use a second coordinate region for the current cell of the first eNB for ePDCCH transmission to reduce inter-cell interference among neighboring cells. In the example of FIG. 5A, if the first eNB knows that the neighboring cell of the second eNB uses ICIC coordinate region 520, the first eNB may not use coordinate region 520 but use coordinate region 521 for ePDCCH transmission and thus the distributed eCCEs may be located in the same coordinate region 521.

In the example of FIG.5A, logical distributed CCE_{D}_0 506 and eCCE_{D}_1 508 may be distributed in different ICIC coordinate regions. For example, CCE_{D}_0 506 may be distributed in a first ICIC coordinate region 520 that is represented by a dotted line in FIG. 5A. CCE_{D}_1 506 may be distributed in a second ICIC coordinate region 521 that is represented by a dot dash line in FIG. 5A. FIG.5B may be used for eCCEs with AGGL two. In FIG. 5B, two distributed eCCEs 506 and 508 for the same ePDCCH are distributed in the same first ICIC coordinate region 520. And, two distributed eCCEs 510 and 512 for the same ePDCCH are in the same second ICIC coordinate region 521.

In one embodiment, AGGL specific logical indexing may be used for distributed eCCEs. For example, the distributed ePDCCH that belong to a search space for a given AGGL may distribute across different ICIC coordinate regions as possible. The example of FIG. 5A shows that the distributed eCCE 506 may be indexed as CCE_{D}_0 that is distributed in ICIC coordinate region 520, the distributed eCCE 508 may be indexed as CCE_{D}_1 that is distributed in ICIC coordinate region 521, the distributed eCCE 510 may be indexed as CCE_{D}_2 that is distributed in ICIC coordinate region 520 while the distributed eCCE 512 may be indexed as CCE_{D}_3 that is distributed in ICIC coordinate region 521. FIG. 5B shows that the distributed eCCEs 506 and 508 for a first ePDCCH may be indexed as CCE_{D}_0 and CCE_{D}_1, respectively that are distributed in the same ICIC coordinate regions 520 while distributed eCCEs 510 and 512 mapped to a second ePDCCH may be indexed as CCE_{D}_2 and CCE_{D}_3 that are distributed in the same ICIC coordinate region 521.

In the examples of FIGs. 4A, 4B, 5A and 5B, the physical eCCE indexes may be used for eNB to implicitly derive physical downlink control channel (PUCCH) indexes to reduce PUCCH indexing ambiguity. In another embodiment, the logical eCCE indexes may be used, by UE, for ePDCCH resource allocation and blind decoding to achieve scheduling gain and ICIC scheduling gain.

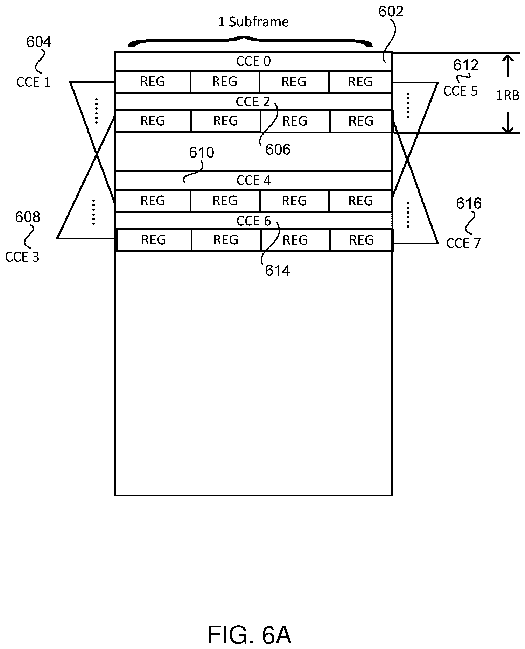

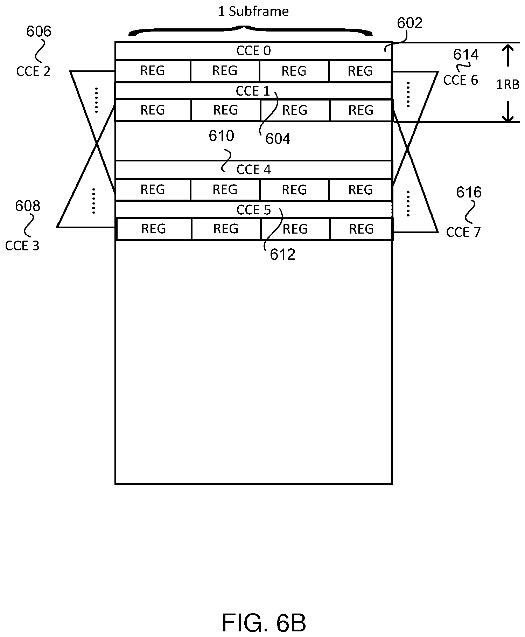

FIG. 6A and 6B provide examples wherein localized eCCEs and distributed eCCEs can be indexed globally. Similar to the embodiments as mentioned previously with regard to FIGs. 4A, 4B, 5A and 5B, the ratio of localized eCCEs to distributed eCCEs in one PRB pair can also be configured by high layer signaling, e.g., RRC signaling from eNB. The global logical eCCE indexing as shown in FIGs. 6A and 6B may be aggregation level specific to include both localized and distributed ePDCCH candidates in UE's search space. In one embodiment, the localized ePDCCH candidate and the distributed ePDCCH candidates may be interleaved with each other. As shown in the example for AGGL 1 of FIG. 6A, the indexes for the eCCEs may begin from, e.g., 0. The localized eCCEs 602, 606, 610, 614 may be indexed as CCE 0, CCE 2, CCE 4, and CCE 6, respectively. The distributed eCCEs 604, 608, 612, 616 may be indexed as CCE 1, CCE 3, CCE 5, and CCE 7, respectively. As shown in the example for AGGL 2 of FIG. 6B, the indexes for the eCCEs may also begin from, e.g., 0, although this may not be required. The localized eCCEs 602 and 604 for a first ePDCCH candidate may be indexed as CCE 0 and CCE 1, respectively; the distributed eCCEs 606 and 608 for a second ePDCCH candidate may be indexed as CCE 2 and CCE 3, respectively; the localized eCCEs 610, 612 may be indexed as CCE 4 and CCE 5, respectively; and the distributed eCCEs 614 and 616 may be indexed as CCE 6 and CCE 7, respectively.

Similar to the embodiments as mentioned previously with regard to FIGs. 4A, 4B, 5A and 5B, the AGGL specific logical eCCE indexing as shown in FIGs. 6A and 6B can be used for ePDCCH assignment and blind decoding. In another embodiment, physical eCCEs as shown in the examples of FIGs. 6A and 6B can be used for implicit PUCCH index derivation. In yet another embodiment, the logical eCCEs indexing of FIGs. 6A and 6B may take ICIC coordinate region into consideration, similar to the examples as discussed previously with regard to FIGs. 5A and 5B. With regard to AGGL 1 of FIG. 6A, different ePDCCHs belonging to the same AGGL may be distributed in different ICIC coordinate regions as possible. For example, distributed eCCEs 604 and 608 may be in different coordinate regions while distributed eCCEs 612 and 616 may be in different coordinate regions. Similarly, in the example of AGGL 2 shown in FIG. 6B, distributed eCCEs 606, 608 mapping to the same ePDCCH may be in the same coordinate region which is different from the coordinate region where distributed eCCEs 614, 608 are located. While FIGs. 6A and 6B illustrate an embodiment of a number of eCCEs, some embodiments may have a different number of eCCEs.

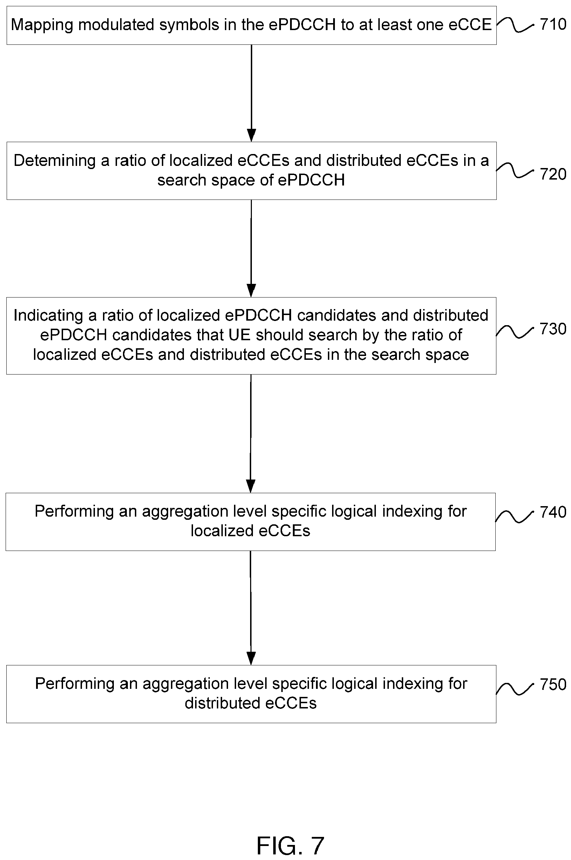

FIG. 7 shows an example of localized and distributed independent eCCE indexing. The eCCE indexing may also be described with reference to FIGs. 4A, 4B, 5A and 5B. In block 710, an eNB may map modulated symbols in each ePDCCH at least one eCCEs. In block 720, the eNB may determine or adjust a ratio of localized eCCEs and distributed eCCEs in a search space of the ePDCCH, e.g., based on a quality of the control channel. In block 730, the eNB may indicate a ratio of the localized ePDCCH candidates and the distributed ePDCCH candidates that UE should search by the ratio of localized eCCEs and distributed eCCEs in the search space, as determined in block 720. In block 740, the eNB may perform an aggregation level specific logical indexing for localized eCCEs. For example, the eNB may perform logical indexing for localized eCCEs with aggregation level of one, as shown in FIGs. 4A and 5A. The eNB may perform logical indexing for localized eCCEs with aggregation level of two, as shown in FIGs. 4B and 5B. In block 750, eNB may perform an aggregation level specific logical indexing for distributed eCCEs. FIGs. 4A and 5A show the examples of AGGL one and FIGs. 4B and 5B show the examples of AGGL two. In another embodiment, eNB may further implicitly derive PUCCH indexes based on physical eCCE indexes that are mapped to the logical eCCE indexes.

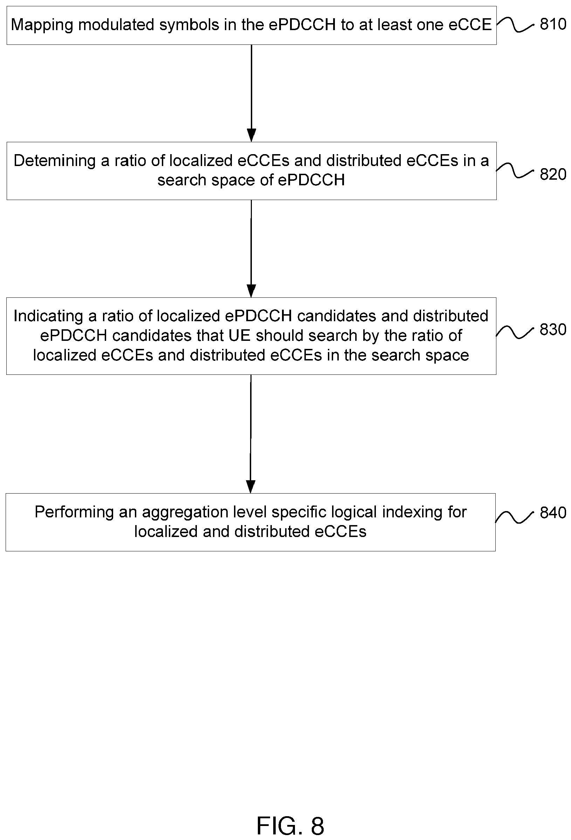

FIG. 8 shows an example of global localized and distributed eCCE indexing. The eCCE indexing may also be described with reference to FIGs. 6A and 6B. In block 810, an eNB may map modulated symbols in each ePDCCH to at least one eCCEs. In block 820, the eNB may detemine a ratio of localized eCCEs and distributed eCCEs in a search space of the ePDCCH, e.g., based on a quality of the control channel. In block 830, the eNB may indicate a ratio of the localized ePDCCH candidates and the distributed ePDCCH candidates that UE should search by the ratio of localized eCCEs and distributed eCCEs in the search space, as determined in block 820. In block 840, the eNB may perform an aggregation level specific logical indexing for localized and distributed eCCEs. For example, the eNB may interleave indexed for the localized eCCEs and the distributed eCCEs, as shown in FIGs. 6A and 6B. Further, in block 750, the eNB may further utilize ICIC coordinate regions as shown in FIGs. 5A and 5B for the logical indexing for distributed eCCEs.

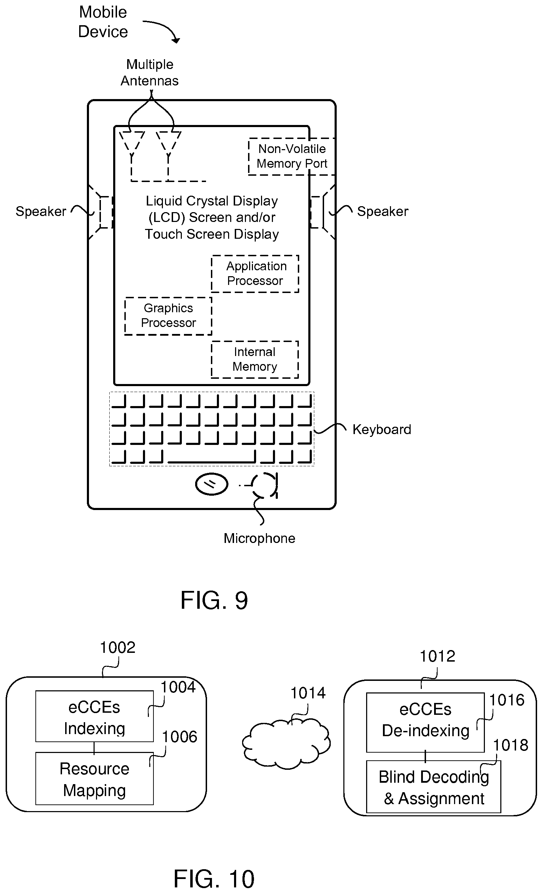

FIG. 9 provides an example illustration of a mobile device, such as a user equipment (UE), a mobile station (MS), a mobile wireless device, a mobile communication device, a tablet, a handset, or other type of mobile wireless device. The mobile device may include one or more antennas configured to communicate with a base station (BS), an evolved Node B (eNB), or other type of wireless wide area network (WWAN) access point. While two antennas are shown, the mobile device may have between one and four or more antennas. The mobile device may be configured to communicate using at least one wireless communication standard including Third Generation Partnership Project Long Term Evolution (3GPP LTE), Worldwide interoperability for Microwave Access (WiMAX), High Speed Packet Access (HSPA), Bluetooth, WiFi, or other wireless standards. The mobile device may communicate using separate antennas for each wireless communication standard or shared antennas for multiple wireless communication standards. The mobile device may communicate in a wireless local area network (WLAN), a wireless personal area network (WPAN), and/or a wireless wide area network (WWAN).

FIG. 9 also provides an illustration of a microphone and one or more speakers that may be used for audio input and output from the mobile device. The display screen may be a liquid crystal display (LCD) screen, or other type of display screen such as an organic light emitting diode (OLED) display. The display screen may be configured as a touch screen. The touch screen may use capacitive, resistive, or another type of touch screen technology. An application processor and a graphics processor may be coupled to internal memory to provide processing and display capabilities. A non-volatile memory port may also be used to provide data input/output options to a user. The non-volatile memory port may also be used to expand the memory capabilities of the mobile device. A keyboard may be integrated with the mobile device or wirelessly connected to the mobile device to provide additional user input. A virtual keyboard may also be provided using the touch screen.

FIG. 10 provides an example illustration of communication between an eNB 1002 and a mobile device 1012, such as a user equipment (UE), a mobile station (MS), a mobile wireless device, a mobile communication device, a tablet, a handset, or other type of mobile wireless device. A description on the mobile device 1012 may refer to the embodiments as mentioned with regard to Fig. 9. The mobile device 1012 may include one or more antennas configured to communicate with a base station (BS), an evolved Node B (eNB), or other type of wireless wide area network (WWAN) access point via a network 1014.

FIG. 10 also provides an illustration of an eCCE indexing module 1004 that may be coupled to a resource mapping module 1006. Although Fig. 10 illustrates two modules in eNB 1002, in some embodiments, eNB 1002 may comprise additional modules. In one embodiment, the eCCE indexing module 1004 may be configured to provide indexes for eCCEs in a search space of ePDCCH, e.g., as shown in FIGs. 7 and 8. In another embodiment, the resource mapping module 1006 may perform resource mapping to form a search space for ePDCCH, to be transmitted to the mobile device 1012. The information on the eCCEs in the search space may be transmitted by the eNB 1002 to the mobile device 1012 via RRC signaling for long term adjustment or SIB signaling for short term adjustment. The UE 1012 may use the RRC signaling and SIB signaling to perform ePDCCH blind decoding based on the corresponding search space. For example, in FIG. 10, the mobile device 1012 may comprise an eCCE de-indexing module 1016 that may obtain or de-index the eCCE indexes based on the indexing as mentioned above with regard to FIGs. 4A, 4B, 5A, 5B, 6A, 6B, 7 and 8. The ePDCCH assignment and blind decoding module 1018 may use the obtained eCCE indexes from module 1016 to perform ePDCCH blind decoding and ePDCCH assignment and/or resource allocation; in some embodiments, module 1018 may be divided into several modules. While two modules are shown in the mobile device 1012, in some embodiments, the mobile device 1012 may comprise any other modules.

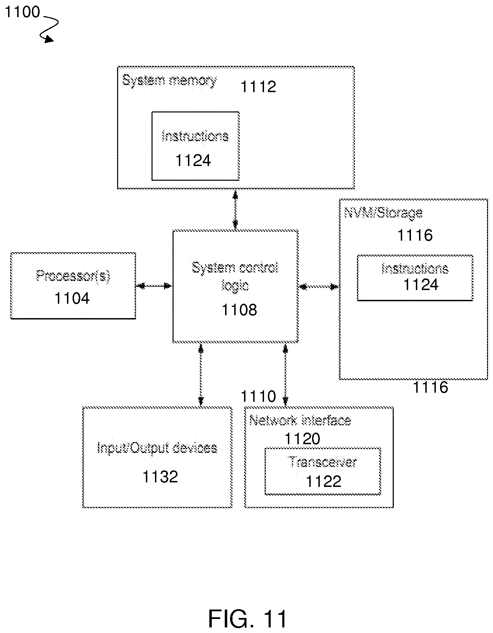

The eNB 1002 and UE 1012 described herein may be implemented into a system using any suitable hardware and/or software to configure as desired. FIG. 11 illustrates, for one embodiment, an example system 1100 comprising one or more processor(s) 1104, system control logic 1108 coupled with at least one of the processor(s) 1104, system memory 1112 coupled with system control logic 1108, non-volatile memory (NVM)/storage 1116 coupled with system control logic 1108, and a network interface 1120 coupled with system control logic 1108.

Processor(s) 1104 may include one or more single-core or multi-core processors. Processor(s) 1104 may include any combination of general-purpose processors and dedicated processors (e.g., graphics processors, application processors, baseband processors, etc.). In an embodiment in which the system 1100 implements UE 1002, processors(s) 1104 may include processor module and be configured to execute the embodiments of Figures 1-10 in accordance with various embodiments. In an embodiment in which the system 1100 implements eNB 1002, processor(s) 1104 may include module 1004 and 1006.

System control logic 1108 for one embodiment may include any suitable interface controllers to provide for any suitable interface to at least one of the processor(s) 1104 and/or to any suitable device or component in communication with system control logic 1108.

System control logic 1108 for one embodiment may include one or more memory controller(s) to provide an interface to system memory 1112. System memory 1112 may be used to load and store data and/or instructions, for example, for system 1100. System memory 1112 for one embodiment may include any suitable volatile memory, such as suitable dynamic random access memory (DRAM), for example.

NVM/storage 1116 may include one or more tangible, non-transitory computer-readable media used to store data and/or instructions, for example. NVM/storage 1116 may include any suitable non-volatile memory, such as flash memory, for example, and/or may include any suitable non-volatile storage device(s), such as one or more hard disk drive(s) (HDD(s)), one or more compact disk (CD) drive(s), and/or one or more digital versatile disk (DVD) drive(s), for example.

The NVM/storage 1116 may include a storage resource physically part of a device on which the system 1100 is installed or it may be accessible by, but not necessarily a part of, the device. For example, the NVM/storage 1116 may be accessed over a network via the network interface 1120.

System memory 1112 and NVM/storage 1116 may respectively include, in particular, temporal and persistent copies of instructions 1124. Instructions 1124 may include instructions that when executed by at least one of the processor(s) 1104 result in the system 1100 implementing a one or both of methods 400 and 700 as described herein. In some embodiments, instructions 1124, or hardware, firmware, and/or software components thereof, may additionally/alternatively be located in the system control logic 1108, the network interface 1120, and/or the processor(s) 1104.

Network interface 1120 may have a transceiver 1122 to provide a radio interface for system 1100 to communicate over one or more network(s) and/or with any other suitable device. The transceiver 1122 may be implement a receiver module and/or a transmitter module. In various embodiments, the transceiver 1122 may be integrated with other components of system 1100. For example, the transceiver 1122 may include a processor of the processor(s) 1104, memory of the system memory 1112, and NVM/Storage of NVM/Storage 1116. Network interface 1120 may include any suitable hardware and/or firmware. Network interface 1120 may include a plurality of antennas to provide a multiple input, multiple output radio interface. Network interface 1120 for one embodiment may include, for example, a network adapter, a wireless network adapter, a telephone modem, and/or a wireless modem.

For one embodiment, at least one of the processor(s) 1104 may be packaged together with logic for one or more controller(s) of system control logic 1108. For one embodiment, at least one of the processor(s) 1104 may be packaged together with logic for one or more controllers of system control logic 1108 to form a System in Package (SiP). For one embodiment, at least one of the processor(s) 1104 may be integrated on the same die with logic for one or more controller(s) of system control logic 1108. For one embodiment, at least one of the processor(s) 1104 may be integrated on the same die with logic for one or more controller(s) of system control logic 1108 to form a System on Chip (SoC).

The system 1100 may further include input/output (I/O) devices 1132. The I/O devices 1132 may include user interfaces designed to enable user interaction with the system 1100, peripheral component interfaces designed to enable peripheral component interaction with the system 1100, and/or sensors designed to determine environmental conditions and/or location information related to the system 1100.

In various embodiments, the user interfaces could include, but are not limited to, a display (e.g., a liquid crystal display, a touch screen display, etc.), a speaker, a microphone, one or more cameras (e.g., a still camera and/or a video camera), a flashlight (e.g., a light emitting diode flash), and a keyboard.

In various embodiments, the peripheral component interfaces may include, but are not limited to, a non-volatile memory port, an audio jack, and a power supply interface.

In various embodiments, the sensors may include, but are not limited to, a gyro sensor, an accelerometer, a proximity sensor, an ambient light sensor, and a positioning unit. The positioning unit may also be part of, or interact with, the network interface 1120 to communicate with components of a positioning network, e.g., a global positioning system (GPS) satellite.

In various embodiments, the system 1100 may be a mobile computing device such as, but not limited to, a laptop computing device, a tablet computing device, a netbook, a mobile phone, etc. In various embodiments, system 1100 may have more or less components, and/or different architectures.

It should be understood that many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executable code of an identified module need not be physically located together, but may comprise disparate instructions stored in different locations which, when joined logically together, comprise the module and achieve the stated purpose for the module.

A module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" means that a particular feature, structure, or characteristic described in connection with the example is included in at least one embodiment of the present invention. Thus, appearances of the phrases "in an example" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as an equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as equivalents of one another, but are to be considered as separate and autonomous representations of the present invention.

Furthermore, the described features, structures, or characteristics may be combined in any suitable manner in one or more embodiments. In the following description, numerous specific details are provided, such as examples of search spaces, to provide a thorough understanding of embodiments of the invention. One skilled in the relevant art will recognize, however, that the invention may be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation may be made without the exercise of inventive faculty, and without departing from the principles and concepts of the invention. Accordingly, it is not intended that the invention be limited, except as by the claims set forth below.

While the methods of FIGs. 1, 2, 7 and 8 is illustrated to comprise a sequence of processes, the methods in some embodiments may perform illustrated processes in a different order.

While certain features of the invention have been described with reference to embodiments, the description is not intended to be construed in a limiting sense.

## Claims

1. An apparatus to be implemented in a user equipment, UE, the apparatus comprising:
means for receiving a radio resource control, RRC, message comprising a ratio of localized enhanced control channel elements, ECCEs, (402, 412) to distributed ECCEs (406, 408) in a resource block pair of the search space of an enhanced physical downlink control channel, EPDCCH;
means for determining, based on said ratio, a set of localized EPDCCH candidates and a set of distributed EPDCCH candidates to monitor in the search space, wherein the search space is UE-specific; and
means for performing a decode attempt on the set of localized EPDCCH candidates and the set of distributed EPDCCH candidates to obtain downlink control information, DCI.

2. The apparatus of claim 1, wherein the circuitry means for determining the set of localized EPDCCH candidates and the set of distributed EPDCCH candidates to monitor based further on an aggregation level of the EPDCCH.

3. The apparatus of claim 2, wherein the set of localized EPDCCH candidates comprises a set of localized ECCEs from among a plurality of localized ECCEs, and the set of distributed EPDCCH candidates comprises a set of distributed ECCEs from among a plurality of distributed ECCEs.

4. The apparatus of claim 3, wherein the plurality of localized ECCEs are numbered from 0 to NECCE,1,k -1, where NECCE,p1,k is a total number of ECCEs in the plurality of localized ECCEs of a subframe k, and wherein the plurality of distributed ECCEs are numbered from 0 to NECCE,p2,k -1, where NECCE,p2,k is a total number of ECCEs in the plurality of distributed ECCEs of the subframe k.

5. The apparatus of any one of claims 3 or 4, wherein the plurality of localized ECCEs and the plurality of distributed ECCEs are located within one or more physical resource block, PRB, pairs.

6. A method to be performed by a user equipment, UE, the apparatus comprising:
receiving a radio resource control, RRC, message comprising a ratio of localized enhanced control channel elements, ECCEs, (402, 412) to distributed ECCEs (406, 408) in a resource block pair of the search space of an enhanced physical downlink control channel, EPDCCH;
determining a set of localized EPDCCH candidates and a set of distributed EPDCCH candidates to monitor in the search space based on said ratio, wherein the search space is UE-specific; and
performing a decode attempt on the localized EPDCCH candidates and on the distributed EPDCCH candidates to obtain downlink control information, DCI.

7. The method of claim 6, wherein the set of localized EPDCCH candidates comprise a set of localized ECCEs from among a plurality of localized ECCEs, and the set of distributed EPDCCH candidates comprise a set of distributed ECCEs from among a plurality of distributed ECCEs, and wherein the set of localized EPDCCH candidates and the set of distributed EPDCCH candidates are within one or more physical resource block, PRB, pairs.

8. The method of claim 7, wherein the plurality of localized ECCEs are numbered from 0 to NECCE,p1,k -1, where NECCE,p1,k is a total number of ECCEs in the plurality of localized ECCEs of a subframe k, and wherein the plurality of distributed ECCEs are numbered from 0 to NECCE,p2,k -1, where NECCE,p2,k is a total number of ECCEs in the plurality of distributed ECCEs of the subframe k.

9. The method of any one of claims 6-8, wherein the number of localized EPDCCH candidates and the number of distributed EPDCCH candidates to monitor are based on an aggregation level of the EPDCCH.

10. At least one computer-readable storage medium comprising instructions, wherein execution of the instructions by one or more processors of a user equipment is to cause the user equipment to perform the method of claims 6-9.

11. An apparatus to be implemented in an evolved nodeB, eNB, the apparatus comprising:
means for determining a mapping of modulated symbols in an enhanced physical downlink control channel, EPDCCH, to a set of localized EPDCCH candidates and a set of distributed EPDCCH candidates, for transmission of downlink control information, DCI;
means for generating a radio resource control, RRC, message comprising a ratio of localized enhanced control channel elements, ECCEs, (402, 412) to distributed ECCEs (406, 408) in a resource block pair of the search space of the EPDCCH, wherein the search space is user equipment, UE, specific; and
means for transmitting the RRC message to a UE.

12. The apparatus of claim 11, further comprising:
means for determining an aggregation level of the EPDCCH, wherein the aggregation level is a number of ECCEs to which DCI is to be mapped; and
means for defining the UE-specific search space of the EPDCCH based on the aggregation level, the number of ECCEs in the localized EPDCCH, and the number of ECCEs in the distributed EPDCCH.

13. The apparatus of claim 12, wherein the set of localized EPDCCH candidates comprise a set of localized ECCEs from among a plurality of localized ECCEs, and the set of distributed EPDCCH candidates comprise a set of distributed ECCEs from among a plurality of distributed ECCEs.

14. The apparatus of claim 13, wherein the plurality of localized ECCEs are numbered from 0 to NECCE,p1,k -1, where NECCE,p1,k is a total number of ECCEs in the plurality of localized ECCEs of a subframe k, and wherein the plurality of distributed ECCEs are numbered from 0 to NECCE,p2,k -1, where NECCE,p2,k is a total number of ECCEs in the plurality of distributed ECCEs of the subframe k.

15. The apparatus of claim 13 and 14, further comprising:
means for mapping the set of localized EPDCCH candidates and the set of distributed EPDCCH candidates to one or more physical resource block, PRB, pairs.

## Patentansprüche

1. Vorrichtung, die in einer Benutzerausrüstung, UE, implementiert werden soll, wobei die Vorrichtung umfasst:
Mittel zum Empfangen einer Funkressourcensteuerung-RRC-Nachricht, die ein Verhältnis von lokalisierten verbesserten Steuerkanalelementen, ECCEs, (402, 412) zu verteilten ECCEs (406, 408) in einem Paar eines Ressourcenblocks des Suchraums eines verbesserten physikalischen Downlink-Steuerkanals, EPDCCH, umfasst;
Mittel zum Bestimmen, basierend auf dem Verhältnis, eines Satzes von lokalisierten EPDCCH-Kandidaten und eines Satzes von verteilten EPDCCH-Kandidaten zum Überwachen im Suchraum, wobei der Suchraum UE-spezifisch ist; und
Mittel zum Durchführen eines Dekodierversuchs an dem Satz von lokalisierten EPDCCH-Kandidaten und dem Satz von verteilten EPDCCH-Kandidaten, um Downlink-Steuerinformationen, DCI, zu erhalten.

2. Vorrichtung nach Anspruch 1, wobei die Schaltung Mittel zum Bestimmen des Satzes der lokalisierten EPDCCH-Kandidaten und des Satzes der verteilten EPDCCH-Kandidaten zum Überwachen basierend ferner auf einer Aggregationsebene des EPDCCH.

3. Vorrichtung nach Anspruch 2, worin der Satz von lokalisierten EPDCCH-Kandidaten einen Satz von lokalisierten ECCEs unter mehreren lokalisierten ECCEs umfasst, und der Satz von verteilten EPDCCH-Kandidaten einen Satz von verteilten ECCEs unter mehreren verteilten ECCEs umfasst.

4. Vorrichtung nach Anspruch 3, wobei die mehreren lokalisierten ECCEs von 0 bis NECCE,p1,k -1 nummeriert sind, wobei NECCE,p1,k eine Gesamtzahl von ECCEs in den mehreren lokalisierten ECCEs eines Teilrahmens k ist, und wobei die mehreren verteilten ECCEs von 0 bis NECCE,p2,k -1 nummeriert sind, wobei NECCE,p2,k eine Gesamtzahl von ECCEs in den mehreren verteilten ECCEs des Teilrahmens k ist.

5. Vorrichtung nach einem der Ansprüche 3 oder 4, wobei sich die mehreren lokalisierten ECCEs und die mehreren verteilten ECCEs innerhalb eines oder mehrerer Paare eines physikalischen Ressourcenblocks, PRB, befinden.

6. Verfahren, das von einer Benutzerausrüstung, UE, durchzuführen ist, wobei die Vorrichtung umfasst:
Empfangen einer Funkressourcensteuerung-RRC-Nachricht, die ein Verhältnis von lokalisierten verbesserten Steuerkanalelementen, ECCEs, (402, 412) zu verteilten ECCEs (406, 408) in einem Paare eines Ressourcenblocks des Suchraums eines verbesserten physikalischen Downlink-Steuerkanals, EPDCCH, umfasst;
Bestimmen, basierend auf dem Verhältnis, eines Satzes von lokalisierten EPDCCH-Kandidaten und eines Satzes von verteilten EPDCCH-Kandidaten zum Überwachen im Suchraum, wobei der Suchraum UE-spezifisch ist; und
Durchführen eines Dekodierversuchs an den lokalisierten EPDCCH-Kandidaten und den verteilten EPDCCH-Kandidaten, um Downlink-Steuerinformationen, DCI, zu erhalten.

7. Verfahren nach Anspruch 6, wobei der Satz von lokalisierten EPDCCH-Kandidaten einen Satz von lokalisierten ECCEs unter mehreren lokalisierten ECCEs umfasst und der Satz von verteilten EPDCCH-Kandidaten einen Satz von verteilten ECCEs unter mehreren verteilten ECCEs umfasst, und wobei der Satz von lokalisierten EPDCCH-Kandidaten und der Satz von verteilten EPDCCH-Kandidaten innerhalb eines oder mehrerer Paare von physischen Ressourcenblocks, PRB, liegen.

8. Verfahren nach Anspruch 7, wobei die mehreren lokalisierten ECCEs von 0 bis NECCE,p1,k -1, nummeriert sind, wobei NECCE,p1,k eine Gesamtzahl von ECCEs in den mehreren lokalisierten ECCEs eines Teilrahmens k ist, und wobei die mehreren verteilten ECCEs von 0 bis NECCE,p2,k -1, nummeriert sind, wobei NECCE,p2,k eine Gesamtzahl von ECCEs in den mehreren verteilten ECCEs des Teilrahmens k ist.

9. Verfahren nach einem der Ansprüche 6-8, wobei die Anzahl der lokalisierten EPDCCH-Kandidaten und die Anzahl der verteilten EPDCCH-Kandidaten zur Überwachung auf einer Aggregationsebene des EPDCCH basieren.

10. Mindestens ein computerlesbares Speichermedium, das Anweisungen umfasst, wobei die Ausführung der Anweisungen durch einen oder mehrere Prozessoren einer Benutzerausrüstung dazu führen soll, dass die Benutzerausrüstung das Verfahren der Ansprüche 6-9 durchführt.

11. Vorrichtung zur Implementierung in einem evolved NodeB, eNB, wobei die Vorrichtung umfasst:
Mittel zum Bestimmen eines Mappings von modulierten Symbolen in einem verbesserten physikalischen Downlink-Steuerkanal, EPDCCH, auf einen Satz von lokalisierten EPDCCH-Kandidaten und einen Satz von verteilten EPDCCH-Kandidaten zum Übertragen von Downlink-Steuerinformationen, DCI;
Mittel zum Erzeugen einer Funkressourcensteuerung-RRC-Nachricht, die ein Verhältnis von lokalisierten verbesserten Steuerkanalelementen, ECCEs, (402, 412) zu verteilten ECCEs (406, 408) in einem Paar eines Ressourcenblocks des Suchraums des EPDCCH umfasst, wobei der Suchraum Benutzerausrüstungs-UE-spezifisch ist; und
Mittel zum Übertragen der RRC-Nachricht an eine UE.

12. Vorrichtung nach Anspruch 11, ferner umfassend:
Mittel zum Bestimmen einer Aggregationsebene des EPDCCH, wobei die Aggregationsebene eine Anzahl von ECCEs ist, auf die DCI gemappt werden soll; und
Mittel zum Definieren des UE-spezifischen Suchraums des EPDCCH basierend auf der Aggregationsebene, der Anzahl der ECCEs im lokalisierten EPDCCH und der Anzahl der ECCEs im verteilten EPDCCH.

13. Vorrichtung nach Anspruch 12, wobei der Satz von lokalisierten EPDCCH-Kandidaten einen Satz von lokalisierten ECCEs unter mehreren lokalisierten ECCEs umfasst, und der Satz von verteilten EPDCCH-Kandidaten einen Satz von verteilten ECCEs unter mehreren verteilten ECCEs umfasst.

14. Vorrichtung nach Anspruch 13, wobei die mehreren lokalisierten ECCEs von 0 bis NECCE,p1,k -1, nummeriert sind, wobei NECCE,p1,k eine Gesamtzahl von ECCEs in den mehreren lokalisierten ECCEs eines Teilrahmens k ist, und wobei die mehreren verteilten ECCEs von 0 bis NECCE,p2,k -1, nummeriert sind, wobei NECCE,p2,k eine Gesamtzahl von ECCEs in den mehreren verteilten ECCEs des Teilrahmens k ist.

15. Vorrichtung nach Anspruch 13 und 14, ferner umfassend:
Mittel zum Mappen des Satzes von lokalisierten EPDCCH-Kandidaten und des Satzes von verteilten EPDCCH-Kandidaten auf einen oder mehrere Paare eines physikalischen Ressourcenblocks, PRB.

## Revendications

1. Appareil destiné à être mis en œuvre dans un équipement d'utilisateur (UE), l'appareil comprenant :
un moyen permettant de recevoir un message de contrôle des ressources radio (RRC) comprenant un rapport entre des éléments de canal de contrôle améliorés (ECCE) localisés (402, 412) et des ECCE distribués (406, 408) dans une paire de blocs de ressources de l'espace de recherche d'un canal de contrôle physique en liaison descendante amélioré (EPDCCH) ;
un moyen permettant de déterminer, sur la base dudit rapport, un ensemble d'EPDCCH localisés candidats et un ensemble d'EPDCCH distribués candidats à surveiller dans l'espace de recherche, l'espace de recherche étant spécifique d'un UE ; et
un moyen permettant de réaliser une tentative de décodage sur l'ensemble d'EPDCCH localisés candidats et l'ensemble d'EPDCCH distribués candidats afin d'obtenir une information de contrôle en liaison descendante (DCI).

2. Appareil selon la revendication 1, dans lequel la circuiterie moyen permettant de déterminer l'ensemble d'EPDCCH localisés candidats et l'ensemble d'EPDCCH distribués candidats à surveiller sur la base en outre d'un niveau d'agrégation de l'EPDCCH.

3. Appareil selon la revendication 2, dans lequel l'ensemble d'EPDCCH localisés candidats comprend un ensemble d'ECCE localisés parmi une pluralité d'ECCE localisés, et l'ensemble d'EPDCCH distribués candidats comprend un ensemble d'ECCE distribués parmi une pluralité d'ECCE distribués.

4. Appareil selon la revendication 3, dans lequel la pluralité d'ECCE localisés sont numérotés de 0 à NECCE,p1,k-1, où NECCE,p1,k est un nombre total d'ECCE dans la pluralité d'ECCE localisés d'une sous-trame k, et dans lequel la pluralité d'ECCE distribués sont numérotés de 0 à NECCE,p2,k-1, où NECCE,p2,k est un nombre total d'ECCE dans la pluralité d'ECCE distribués de la sous-trame k.

5. Appareil selon l'une quelconque des revendications 3 et 4, dans lequel la pluralité d'ECCE localisés et la pluralité d'ECCE distribués sont situés dans une ou plusieurs paires de blocs de ressources physiques (PRB).

6. Procédé destiné à être réalisé par un équipement d'utilisateur (UE), le procédé consistant à :
recevoir un message de contrôle des ressources radio (RRC) comprenant un rapport entre des éléments de canal de contrôle améliorés (ECCE) localisés (402, 412) et des ECCE distribués (406, 408) dans une paire de blocs de ressources de l'espace de recherche d'un canal de contrôle physique en liaison descendante amélioré (EPDCCH) ;
déterminer, sur la base dudit rapport, un ensemble d'EPDCCH localisés candidats et un ensemble d'EPDCCH distribués candidats à surveiller dans l'espace de recherche, l'espace de recherche étant spécifique d'un UE ; et
réaliser une tentative de décodage sur les EPDCCH localisés candidats et sur les EPDCCH distribués candidats afin d'obtenir une information de contrôle en liaison descendante (DCI).

7. Procédé selon la revendication 6, dans lequel l'ensemble d'EPDCCH localisés candidats comprend un ensemble d'ECCE localisés parmi une pluralité d'ECCE localisés, et l'ensemble d'EPDCCH distribués candidats comprend un ensemble d'ECCE distribués parmi une pluralité d'ECCE distribués, et dans lequel l'ensemble d'EPDCCH localisés candidats et l'ensemble d'EPDCCH distribués candidats sont dans une ou plusieurs paires de blocs de ressources physiques (PRB).

8. Procédé selon la revendication 7, dans lequel la pluralité d'ECCE localisés sont numérotés de 0 à NECCE,p1,k-1, où NECCE,p1,k est un nombre total d'ECCE dans la pluralité d'ECCE localisés d'une sous-trame k, et dans lequel la pluralité d'ECCE distribués sont numérotés de 0 à NECCE,p2,k-1, où NECCE,p2,k est un nombre total d'ECCE dans la pluralité d'ECCE distribués de la sous-trame k.

9. Procédé selon l'une quelconque des revendications 6 à 8, dans lequel le nombre d'EPDCCH localisés candidats et le nombre d'EPDCCH distribués candidats à surveiller sont basés sur un niveau d'agrégation de l'EPDCCH.

10. Support(s) de stockage lisible(s) par ordinateur, comprenant des instructions, l'exécution des instructions par un ou plusieurs processeurs d'un équipement d'utilisateur amenant l'équipement d'utilisateur à réaliser le procédé selon les revendications 6 à 9.

11. Appareil destiné à être mis en œuvre dans un nœud B évolué (eNB), l'appareil comprenant :
un moyen permettant de déterminer une mise en correspondance de symboles modulés dans un canal de contrôle physique en liaison descendante amélioré (EPDCCH) avec un ensemble d'EPDCCH localisés candidats et un ensemble d'EPDCCH distribués candidats, pour la transmission d'une information de contrôle en liaison descendante (DCI) ;
un moyen permettant de générer un message de contrôle des ressources radio (RRC) comprenant un rapport entre des éléments de canal de contrôle améliorés (ECCE) localisés (402, 412) et des ECCE distribués (406, 408) dans une paire de blocs de ressources de l'espace de recherche de l'EPDCCH, l'espace de recherche étant spécifique d'un équipement d'utilisateur (UE) ; et
un moyen permettant de transmettre le message RRC à un UE.

12. Appareil selon la revendication 11, comprenant en outre :
un moyen permettant de déterminer un niveau d'agrégation de l'EPDCCH, le niveau d'agrégation étant un nombre d'ECCE avec lesquels une DCI doit être mise en correspondance ; et
un moyen permettant de définir l'espace de recherche spécifique d'un UE de l'EPDCCH sur la base du niveau d'agrégation, du nombre d'ECCE dans l'EPDCCH localisé et du nombre d'ECCE dans l'EPDCCH distribué.

13. Appareil selon la revendication 12, dans lequel l'ensemble d'EPDCCH localisés candidats comprend un ensemble d'ECCE localisés parmi une pluralité d'ECCE localisés, et l'ensemble d'EPDCCH distribués candidats comprend un ensemble d'ECCE distribués parmi une pluralité d'ECCE distribués.

14. Appareil selon la revendication 13, dans lequel la pluralité d'ECCE localisés sont numérotés de 0 à NECCE,p1,k-1, où NECCE,p1,k est un nombre total d'ECCE dans la pluralité d'ECCE localisés d'une sous-trame k, et dans lequel la pluralité d'ECCE distribués sont numérotés de 0 à NECCE,p2,k-1, où NECCE,p2,k est un nombre total d'ECCE dans la pluralité d'ECCE distribués de la sous-trame k.

15. Appareil selon les revendications 13 et 14, comprenant en outre :
un moyen permettant de mettre en correspondance l'ensemble d'EPDCCH localisés candidats et l'ensemble d'EPDCCH distribués candidats avec une ou plusieurs paires de blocs de ressources physiques (PRB).
